# EUROPÄISCHE PATENTSCHRIFT

(11) **EP 2 079 804 B1**
(45) Veröffentlichungstag und Bekanntmachung des Hinweises auf die Patenterteilung: **25.04.2012**
(21) Anmeldenummer: 07818722.6
(22) Anmeldetag: 05.10.2007
(51) Int. Cl.: C08L 95/00, D06N 5/00, E04D 5/00

(54) **BITUMENZUSAMMENSETZUNG UND VERWENDUNG DERSELBEN**
BITUMEN COMPOSITION AND USE THEREOF
COMPOSITION BITUMINEUSE ET SON UTILISATION

(30) Priorität: 17.10.2006 DE 102006049453
(43) Veröffentlichungstag der Anmeldung: 22.07.2009
(73) Patentinhaber: Marzouki, Taieb, 27321 Thedinghausen (DE); Haupt, Bertram, New Port Richey FL 34652 (US)
(72) Erfinder: Marzouki, Taieb, 27321 Thedinghausen (DE); Haupt, Bertram, New Port Richey FL 34652 (US)
(74) Vertreter: Möller, Friedrich
(86) Internationale Anmeldenummer: PCT/EP2007/008645
(87) Internationale Veröffentlichungsnummer: WO 2008/046524

(56) Entgegenhaltungen:
- WO-A-2006/107179
- DE-A1- 4 416 567
- DE-A1- 10 028 107
- DE-A1- 19 952 846
- US-A- 3 963 659

## Beschreibung

Die Erfindung betrifft eine Bitumenzusammensetzung für Bauwerksabdichtungen gemäß dem Oberbegriff des Anspruchs 1 sowie eine bevorzugte Verwendung einer solchen Bitumenzusammensetzung.

Bitumenzusammensetzungen werden für Bauwerksabdichtungen wie Dachbahnen, Brückenabdichtungen, Kellerabdichtungen oder dergleichen eingesetzt. Dachbahnen finden insbesondere im Flachdachbereich als Dachabdichtungen Verwendung. Solche Dachbahnen sind der Witterung und vor allem hohen mechanischen und thermischen Beanspruchungen ausgesetzt. Um die gestellten Anforderungen zu erfüllen, werden Dachbahnen und andere Bauwerksabdichtungen aus Oxydbiturnen, Elastomerbitumen oder Plastomerbitumen gebildet.

Plastomerbitumen verfügt gegenüber Oxydbitumen und Elastomerboumen über eine bessere Alterungsbeständigkeit. Plastomerbitumen hat jedoch zwei wesentliche Nachteile. Bei hoher Temperatur wird Plastomerbitumen weich. Vor allem der Sonne ausgesetzte Dachbahnen sind dadurch im Sommer verformbar. Das macht Dachbahnen aus Plastomerbitumen im Sommer schwer verlegbar und nur wenig trittfest Ein weiterer Nachteil besteht darin, dass Plastomerbitumen bei tiefen Temperaturen stark an Flexibilität verliert, nämlich quasi hart wird. Um die genannten Nachteile einigermaßen zu beseitigen, müssen Bauwerksabdichtungen, insbesondere Dachbahnen, mit größeren Mengen an Plastomeren versehen sein. Da Plastomerwerkstoffe verhältnismäßig teuer sind, führt das zu hohen Kosten der daraus gebildeten Bauwerksabdichtungen, insbesondere Dachbahnen.

Aus der DE 199 52 846 A1 und der DE 100 28 107 A1 sind Bitumenmischungen für Bauwerksabdichtungen bekannt, die auf Destillationsbitumen mit einem Zusatz von SBS-Kautschuk beruhen. Da die bekannten Bitumenzusammensetzungen über kein Plastomerbitumen verfügen, treten die Probleme nicht auf, die bei Bauwerksabdichtungen mit Plastomerbitumen vorherrschen

Aus der WO 2006/107179 A, der DE 4416 567 A1 und der US-A-3 963 659 sind bituminöse Materialien für den Straßenbau bekannt. An diese werden ganz andere Anforderungen gestellt als an eine Bauwerksabdichtung, insbesondere Plastomerbitumenbahnen. Deswegen sind die Probleme, die bei der Verwendung von Plastomerbitumen zu Bauwerksabdichtungen auftauchen, bei Straßenbaumaterialien nicht vorhanden oder treten nicht auf.

Der Erfindung liegt die Aufgabe zugrunde, eine Bitumenzusammensetzung für Bauwerksabdichtungen, insbesondere Dachbahnen, zu schaffen, die auf Plastomervverkstoffen basiert, aber die Nachteile herkömmlicher Plastomerbitumenbahnen eliminiert sind.

Eine Bitumenzusammensetzung zur Lösung dieser Aufgabe weist die Merkmale des Anspruchs 1auf. Durch das feste Paraffin mit einem Erstarrungspunkt im Bereich von 90° Bis 110° in der Bitumenzusammensetzung wird die Festigkeit der Bitumenzusammensetzung bei hohen Temperaturen erhöht und dabei der Nachteil der Plastizität und der Verformbarkeit des mindestens einen Plastomerbitumens bei hohen Temperaturen beseitigt, und zwar ohne dass die Konzentration an Plastomeren erhöht wird. Es wird so eine Bitumenzusammensetzung geschaffen, die Bauwerksabdichtungen bei hohen Temperaturen eine gute Trittfestigkeit verleiht. Überraschend hat sich gezeigt, dass durch die Zugabe von hochsiedenden gesättigten Kohlenwasserstoffen die begrenzte Kälteflexibilität des Plastomerbitumens verbessert wird. Geringe Mengen hochsiedender gesättigter Kohlenwasserstoffe reichen bereits aus, um die Flexibilität der Plastomerbitumen enthaltenden Bitumenzusammensetzung bei niedrigen Temperaturen zu erhöhen, und zwar ohne dass dazu die Menge des Plastomerbitumens in der Bitumenzusammensetzung erhöht werden muss.

Bevorzugt verfügt die Bitumenzusammensetzung über 5 bis 30 Gew.-% mindestens eines Plastomerwerkstoffs, bis zu 5 Gew,-% festes Paraffin mit einem Erstarrungspunkt im Bereich von 90°bis 110° und 1 bis 7 Gew.-% hochsiedende Kohlenwasserstoffe. Hinzu kommen Destillationsbitumen mit einem Anteil von vorzugsweise 30 bis 70 Gew.-% und mindestens ein Füllstoff, dessen Anteil bevorzugt 10 bis 60 Gew.-% beträgt.

Es ist bevorzugt vorgesehen, dass der Anteil von Plastomerbitumen oder einem vergleichbaren Plastomerwerkstoff, an der erfindungsgemäßen Bitumenzusammensetzung nur etwa 5 bis 20 Gew.-% beträgt. Ein höherer Anteil an Plastomerbitumen ist nicht erforderlich, um die eingangs geschilderten Nachteile zu beseitigen. Dazu reichen allein die zugegebenen kleinen Mengen an hochsiedenden gesättigten Kohlenwasserstoffen, insbesondere Fluxöl einerseits und Paraffin andererseits aus.

Beim Plastomerbitumen kann es sich um amorphes Polypropylen (APP), isotaktisches Polypropylen (IPP) und/oder amorphes Poly-Alpha-Olefinen Copolymerisat (APAO) handeln.

Bei einer bevorzugten Ausgestaltung der Erfindung beträgt der Gehalt an Destillationsbitumen 40 bis 60 Gew.-% bzw. der Gehalt an mindestens einem Füllstoff 15 bis 45 Gew.-%.

Gemäß einer Weiterbildung der Erfindung ist vorgesehen, dass der Gehalt an Paraffin nur 0,5 bis 3 Gew.-% beträgt. Dieser sehr geringe Anteil von Paraffin reicht bereits aus, um die Verformbarkeit der Bitumenzusammensetzung bei hohen Temperaturen zu reduzieren.

Des Weiteren ist vorgesehen, ein festes Paraffin mit einem Erstarrungspunkt von etwa 100°C zu verwenden. Ein solches Paraffin verleiht der Bitumenzusammensetzung schon in kleinen Mengen eine deutliche Verbesserung der Festigkeit bei hohen Temperaturen.

Gemäß einer weiteren bevorzugten Ausgestaltung der Erfindung betrifft der Gehalt an hochsiedenden gesättigten Kohlenwasserstoffen in der Bitumenzusammensetzung 1 bis 4 Gew.-%. Schon mit dieser kleinen Menge an hochsiedenden ungesättigten Kohlenwasserstoffen erhält die Bitumenzusammensetzung eine Kältestabilität. Bevorzugt ist vorgesehen, als hochsiedende gesättigte Kohlenwasserstoffe ein Fluxöl zu verwenden. Dieses hat sich besonders auch in kleinen Mengen überraschend als besonders wirksam zur Verbesserung der Kältestabilität der Bitumenzusammensetzung auf Basis von Plastomerwerkstoffen erwiesen.

Die zuvor erläuterte Bitumenzusammensetzung ist erfindungsgemäß besonders vorteilhaft verwendbar zur Herstellung einer mindestens eine Verstärkungseinlage aufweisenden Dachbahn, und zwar vorzugsweise eine mindestens eine Verstärkungseinlage aufweisende Oberlagsdachbahn.

Andere Verwendungen der erfindungsgemäßen Bitumenzusammensetzung sind Brückenabdichtungen, Kellerabdichtungen oder sonstige Bauwerksabdichtungen.

Nachfolgend werden Beispiele bevorzugter erfindungsgemäßer Bitumenzusammensetzungen beschrieben:

| | | |
|---|---|---|
| Beispiel 1: | Plastomerbitumen (APP, APAO und/oder IPP) | 5 bis 30 Gew.-% |
| | Paraffin | bis zu 5 Gew.-% |
| | hochsiedende gesättigte Kohlenwasserstoffe | 1 bis 7 Gew.-% |
| | Destillationsbitumen | 30 bis 70 Gew.-% |
| | ein oder mehrere Füllstoffe | restliche Gew.%. |
| Beispiel 2: | Plastomerbitumen (APP, APAO und/oder IPP) | 5 bis 30 Gew.-% |
| | Paraffin | bis zu 5 Gew.-% |
| | hochsiedende gesättigte Kohlenwasserstoffe | 1 bis 7 Gew.-% |
| | ein oder mehrere Füllstoffe | 10 bis 60 Gew.-% |
| | Destillationsbitumen | restliche Gew.-% |
| Beispiel 3: | Plastomerbitumen (APP, APAO und/oder IPP) | 5 bis 20 Gew.-% |
| | Paraffin | 0,5 bis 3 Gew.-% |
| | hochsiedende gesättigte Kohlenwasserstoffe | 1 bis 4 Gew.-% |
| | Destillationsbitumen | 40 bis 60 Gew.-% |
| | ein oder mehrere Füllstoffe | restliche Gew.-% |
| Beispiel 4: | Plastomerbitumen (APP, APAO und/oder IPP) | 5 bis 20 Gew.-% |
| | Paraffin | 0,5% bis 3 Gew.-% |
| | hochsiedende gesättigte Kohlenwasserstoffe | 1 bis 4 Gew.-% |
| | ein oder mehrere Füllstoffe | 15 bis 45 Gew.-% |
| | Destillationsbitumen | restliche Gew.-% |
| Beispiel 5: | Plastomerbitumen (APP, APAO und/oder IPP) | 5 bis 30 Gew.-% |
| | Paraffin | bis zu 5 Gew.-% |
| | Fluxöl | 1 bis 7 Gew.-% |
| | Destillationsbitumen | 30 bis 70 Gew.-% |
| | ein oder mehrere Füllstoffe | restliche Gew.-% |
| Beispiel 6: | Plastomerbitumen (APP, APAO und/oder IPP) | 5 bis 30 Gew.-% |
| | Paraffin | bis zu 5 Gew.-% |
| | Fluxöl | 1 bis 7 Gew.-% |
| | ein oder mehrere Füllstoffe | 10 bis 60 Gew.-% |
| | Destillationsbitumen | restliche Gew.-% |
| Beispiel 7: | Plastomerbitumen (APP, APAO und/oder IPP) | 5 bis 20 Gew.-% |
| | Paraffin | 0,5 bis 3 Gew.-% |
| | Fluxöl | 1 bis 4 Gew.-% |
| | Destillationsbitumen | 40 bis 60 Gew.-% |
| | ein oder mehrere Füllstoffe | restliche Gew.-% |
| Beispiel 8: | Plastomerbitumen (APP, APAO und/oder IPP) | 5 bis 20 Gew.-% |
| | Paraffin | 0,5 bis 3 Gew.-% |
| | Fluxöl | 1 bis 4 Gew,-% |
| | ein oder mehrere Füllstoffe | 15 bis 45 Gew.-% |
| | Destillationsbitumen | restliche Gew.-% |

Bei den in den voranstehenden Beispielen genannten Paraffinen handelt es sich um feste Paraffine mit einem Erstarrungspunkt im Bereich von 90 bis 110°C, vorzugsweise etwa 100°C.

Die Angabe restliche Gew.-%" in den vorstehend genannten Beispielen bedeutet, dass entweder Destillatonsbitumen oder Füllstoffe mit einer solchen Menge in der Bitumenzusammensetzung enthalten sind, dass die Summe aller Komponenten 100 Gew.-% ergibt.

## Patentansprüche

1. Bitumenzusammensetzung für Bauwerksabdichtungen, insbesondere Dachbahnen, auf der Basis von Plastomerbitumen, **gekennzeichnet durch** 5 bis 30 Gew-% an mindestens einem Plastomerbitumen, bis zu 5 Gew.-% festes Paraffin mit einem Erstarrungspunkt im Bereich von 90°C bis 110°C, 1 bis 7 Gew.-% hochsiedende gesättigte Kohlenwasserstoffe, Destillationsbitumen und mindestens einem Füllstoff,

2. Bitumenzusammensetzung nach Anspruch 1, **gekennzeichnet durch** 5 bis 30 Gew.-% an mindestens einem Plastomerbitumen, 30 bis 70 Gew.-% Destillationsbitumen, bis zu 5 Gew.-% festes Paraffin mit einem Erstarrungspunkt im Bereich von 90°C bis 110°C, 1 bis 7 Gew.-% hochsiedende gesättigte Kohlenwasserstoffe und einen restlichen Anteil von mindestens einem Füllstoff.

3. Bitumenzusammensetzung nach Anspruch 1, **gekennzeichnet durch** 5 bis 30 Gew.-% an mindestens einem Plastomerbitumen, bis zu 5 Gew.-% festes Paraffin mit einem Erstarrungspunkt im Bereich von 90°C bis 110°C, 1 bis 7 Gew.-% hochsiedende gesättigte Kohlenwasserstoffe, 10 bis 60 Gew.-% mindestens eines Füllstoffs und als Rest Destillationsbitumen.

4. Bitumenzusammensetzung nach einem der vorhergehenden Ansprüche, **dadurch gekennzeichnet, dass** der Gehalt an mindestens einem Plastomerbitumen mit 5 bis 20 Gew.-% beträgt.

5. Bitumenzusammensetzung nach einem der vorhergehenden Ansprüche, **dadurch gekennzeichnet, dass** das mindestens eine Plastomerbitumen amorphes Polypropylen, isotaktisches Polypropylen oder amorphes Poly-Alpha-Olefin-Copolymerisat ist.

6. Bitumenzusammensetzung nach einem der vorhergehenden Ansprüche, **gekennzeichnet durch** 30 bis 70 Gew.-%, vorzugsweise 40 bis 60 Gew.-%, Destillationsbitumen.

7. Bitumenzusammensetzung nach einem der vorhergehenden Ansprüche, **gekennzeichnet durch** 0,5 bis 3 Gew.-% Paraffin.

8. Bitumenzusammensetzung nach einem der vorhergehenden Ansprüche, **dadurch gekennzeichnet, dass** das feste Paraffin einen Erstarrungspunkt von 100°C aufweist.

9. Bitumenzusammensetzung nach einem der vorhergehenden Ansprüche, **gekennzeichnet durch** 1 bis 4 Gew.-% hochsiedende, gesättigte Kohlenwasserstoffe.

10. Bitumenzusammensetzung nach einem der vorhergehenden Ansprüche, **dadurch gekennzeichnet, dass** die hochsiedenden, gesättigten Kohlenwasserstoffe ein Fluxöl sind.

11. Bitumenzusammensetzung nach einem der vorhergehenden Anspruch, **gekennzeichnet durch** 10 bis 60 Gew.-%, vorzugsweise 15 bis 45 Gew.-% mindestens eines Füllstoffs.

12. Verwendung einer Bitumenzusammensetzung nach mindestens einem der Ansprüche 1 bis 11 zur Herstellung einer mindestens eine Verstärkungseinlage aufweisenden Dachbahn, insbesondere einer mindestens eine Verstärkungseinlage aufweisenden Oberlagsdachbahn.

## Claims

1. Bitumen composition for built structure seals, especially roofing membranes, based on plastomer bitumen, **characterized by** 5% to 30% by weight of at least one plastomer bitumen, up to 5% by weight of solid paraffin having a solidification point in the range of 90 °C to 110 °C, 1 % to 7% by weight of high-boiling saturated hydrocarbons, distillation bitumen and at least one filler material.

2. Bitumen composition according to claim 1, **characterized by** 5% to 30% by weight of at least one plastomer bitumen, 30% to 70% by weight of distillation bitumen, up to 5% by weight of solid paraffin having a solidification point in the range of 90 °C to 110 °C, 1% to 7% by weight of high-boiling saturated hydrocarbons and a remainder of at least one filler material.

3. Bitumen composition according to claim 1, **characterized by** 5% to 30% by weight of at least one plastomer bitumen, up to 5% by weight of solid paraffin having a solidification point in the range of 90 °C to 110 °C, 1 % to 7% by weight of high-boiling saturated hydrocarbons, 10% to 60% by weight of at least one filler material and the remainder comprising distillation bitumen.

4. Bitumen composition according to one of the previous claims, **characterized in that** the content of at least one plastomer bitumen is between 5% and 20% by weight.

5. Bitumen composition according to one of the previous claims, **characterized in that** the at least one plastomer bitumen is amorphous polypropylene, isotactic polypropylene or amorphous poly-alpha-olefin copolymer.

6. Bitumen composition according to one of the previous claims, **characterized by** 30% to 70% by weight, preferably 40% to 60% by weight of distillation bitumen.

7. Bitumen composition according to one of the previous claims, **characterized by** 0.5% to 3% by weight of paraffin.

8. Bitumen composition according to one of the previous claims, **characterized in that** the solid paraffin has a solidification point of 100 °C.

9. Bitumen composition according to one of the previous claims, **characterized by** 1 % to 4% by weight of high-boiling, saturated hydrocarbons.

10. Bitumen composition according to one of the previous claims, **characterized in that** the high-boiling, saturated hydrocarbons are a flux oil.

11. Bitumen composition according to one of the previous claims, **characterized by** 10% to 60% by weight, preferably 15% to 45% by weight of at least one filler material.

12. Use of a bitumen composition according to at least one of the claim 1 to 11 for the production of a roofing membrane having at least one reinforcing ply, in particular an overlayment roofing membrane having at least one reinforcing ply.

## Revendications

1. Composition de bitume pour joints de bâtiments, notamment plaques de couverture, à base de bitume blastomère, **caractérisée par** 5 à 30 % en poids d'au moins un bitume plastomère, jusqu'à 5 % en poids d'une paraffine solide ayant un point de solidification dans la plage allant de 90 °C à 110 °C, 1 à 7 % en poids d'hydrocarbures saturés de point d'ébullition élevé, un bitume de distillation et au moins une charge.

2. Composition de bitume selon la revendication 1, **caractérisée par** 5 à 30 % en poids d'au moins un bitume plastomère, 30 à 70 % en poids d'un bitume de distillation, jusqu'à 5 % en poids d'une paraffine solide ayant un point de solidification dans la plage allant de 90 °C à 110 °C, 1 à 7 % en poids d'hydrocarbures saturés de point d'ébullition élevé, et une fraction résiduelle d'au moins une charge.

3. Composition de bitume selon la revendication 1, **caractérisée par** 5 à 30 % en poids d'au moins un bitume plastomère, jusqu'à 5 % en poids d'une paraffine solide ayant un point de solidification dans la plage allant de 90 °C à 110 °C, 1 à 7 % en poids d'hydrocarbures saturés de point d'ébullition élevé, 10 à 60 % en poids d'au moins une charge, le reste étant un bitume de distillation.

4. Composition de bitume selon l'une quelconque des revendications précédentes, **caractérisée en ce que** la tenseur en au moins un bitume plastomère est de 5 à 20 % en poids.

5. Composition de bitume selon l'une quelconque des revendications précédentes, **caractérisée en ce que** le ou les bitumes plastomères sont du polypropylène amorphe, du polypropylène isotactique ou un copolymère de poly-alpha-oléfine amorphe.

6. Composition de bitume selon l'une quelconque des revendications précédentes, **caractérisée par** 30 à 70 % en poids, de préférence 40 à 60 % en poids, de bitume de distillation.

7. Composition de bitume selon l'une quelconque des revendications précédentes, **caractérisée par** 0,5 à 3% % en poids de paraffine.

8. Composition de bitume selon l'une quelconque des revendications précédentes, **caractérisée en ce que** la paraffine solide présente un point de solidification de 100 °C.

9. Composition de bitume selon l'une quelconque des revendications précédentes, **caractérisée par** 1 à 4 % en poids d'hydrocarbures saturés de point d'ébullition élevé.

10. Composition de bitume selon l'une quelconque des revendications précédentes, **caractérisée en ce que** les hydrocarbures saturés de point d'ébullition élevé sont une huile de fluxage.

11. Composition de bitume selon l'une quelconque des revendications précédentes, **caractérisée par** 10 à 60 % en poids, de préférence 15 à 45 % en poids, d'au moins une charge.

12. Utilisation d'une composition de bitume selon au moins l'une quelconque des revendications 1 à 11 pour la fabrication d'une plaque de couverture comprenant au moins un insert renforçant, notamment d'une plaque de couverture supérieure comprenant au moins un insert renforçant.
